# EUROPÄISCHE PATENTSCHRIFT

(11) **EP 1 698 389 B1**
(45) Veröffentlichungstag und Bekanntmachung des Hinweises auf die Patenterteilung: **02.04.2008**
(21) Anmeldenummer: 06003761.1
(22) Anmeldetag: 24.02.2006
(51) Int. Cl.: B01D 46/42, B01D 47/02

(54) **Filtervorrichtung für trockene, gasförmige Medien**
Filter device for a dry, gaseous media
Dispositif de filtration pour des milieux gazeux secs

(30) Priorität: 28.02.2005 DE 202005003369 U
(43) Veröffentlichungstag der Anmeldung: 06.09.2006
(73) Patentinhaber: Handte Umwelttechnik GmbH, 78532 Tuttlingen (DE)
(72) Erfinder: Handte, Siegfried, Dipl. -Ing., D-78351 Bodman-Ludwigshafen (DE)
(74) Vertreter: Müller, Hans

(56) Entgegenhaltungen:
- DE-U- 1 742 052
- DE-U1- 29 905 549
- PATENT ABSTRACTS OF JAPAN Bd. 018, Nr. 553 (C-1263), 21. Oktober 1994 (1994-10-21) -& JP 06 198221 A (B B F YAMATE:KK), 19. Juli 1994 (1994-07-19)

## Beschreibung

### TECHNISCHES GEBIET

Die Erfindung betrifft eine Filtervorrichtung für trockene, gasförmige Medien. Beim Einsatz von solchen Filtervorrichtungen besteht die Gefahr, dass in dem gasförmigen Medium vorhandene Funken mit durch die Filtervorrichtung hindurchgesaugt werden und die in der Filtervorrichtung vorhandenen Filterelemente entzünden können.

### STAND DER TECHNIK

Aus der DE 299 05 549 U1 ist eine derartige Filtervorrichtung bekannt. Diese Filtervorrichtung besitzt ein Filtergehäuse, dem strömungsmäßig ein Zyklon vorgeschaltet ist. In diesem Zyklon wird das zu reinigende gasförmige Medium in eine Rotationsströmung gebracht. Die in dem Gasstrom vorhandenen Partikel und Funkenteilchen stoßen dadurch an die Innenseite des äußeren Rohres des aus einem äußeren und einem inneren Rohr bestehenden Zyklons. Durch die Berührung erlöschen die Funkenteilchen. Die glühenden Partikel geben nämlich durch ihre Berührung mit der Wandung des äußeren Rohres Wärmeenergie ab. Die rotierende Gasströmung strömt dann ohne glühende Partikel an in dem Filtergehäuse vorhandene Filterelemente. Eine solche Filtervorrichtung liefert für trockene, gasförmige Medien zufriedenstellende Filterergebnisse.

### DARSTELLUNG DER ERFINDUNG

Ausgehend von diesem Stand der Technik liegt der Erfindung die Aufgabe zugrunde, eine demgegenüber verbesserte Filtervorrichtung anzugeben.

Diese Erfindung ist durch die Merkmale des Anspruchs 1 gegeben. Sinnvolle Weiterbildungen der Erfindung sind Gegenstand von sich daran anschließenden weiteren Ansprüchen.

Durch die Maßnahme, dass das zu reinigende trockene, gasförmige Medium zunächst einmal mit Wasser in Berührung kommt, bevor dieses Medium dem Zyklon zugeführt wird, werden Funken bereits gelöscht, bevor die Gasströmung in den Zyklon eintritt. Dadurch wird die Gefahr, dass Funken in den Bereich der Filterelemente gelangen können, gegenüber dem Stand der Technik noch weiter verringert.

Das Einleiten des zu reinigenden Mediums in die erfindungsgemäße Vorrichtung kann durch eine Einströmleitung hindurch erfolgen, mittels der das in die Filtervorrichtung einströmende Medium in das Wasser eines Wasserbehälter hinein oder gegen dessen Wasseroberfläche geleitet werden kann.

Nach einem auch in der Zeichnung dargestellten Ausführungsbeispiel kann der Wasserbehälter mit dem Zyklon über einen Leitungskanal verbunden sein, so dass einerseits das zu reinigende Medium, das mit Wasser benetzte Partikel enthält, in den Zyklon hineingesaugt werden können, und andererseits das in dem Zyklon ausgeschiedene Wasser wieder zurück in den Wasserbehälter gelangen kann. Nähere Einzelheiten dazu können dem in der Zeichnung dargestellten Ausführungsbeispiel entnommen werden.

Der Wasserbehälter kann fest oder austauschbar an der Filtervorrichtung wie insbesondere an dem mit dem Zyklon verbundenen Leitungskanal angeschlossen sein. In diesem Zusammenhang kann er über ein flexibles Verbindungselement, insbesondere über eine Manschette, an besagtem Leitungskanal angeschlossen sein.

Mittels einer Wasserstandsregulierungs-Einrichtung kann das in dem Wasserbehälter vorhandene Wasser auf eine beliebige, insbesondere konstante Wasserhöhe gehalten werden.

Weitere Merkmale und Vorteile der Erfindung sind den in den Ansprüchen ferner angegebenen Merkmalen sowie dem nachfolgenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine teilweise geschnittene Seitenansicht einer Filtervorrichtung nach der Erfindung,
- Fig. 2: einen Schnitt längs der Linie II - II in Fig. 1.

### WEGE ZUM AUSFÜHREN DER ERFINDUNG

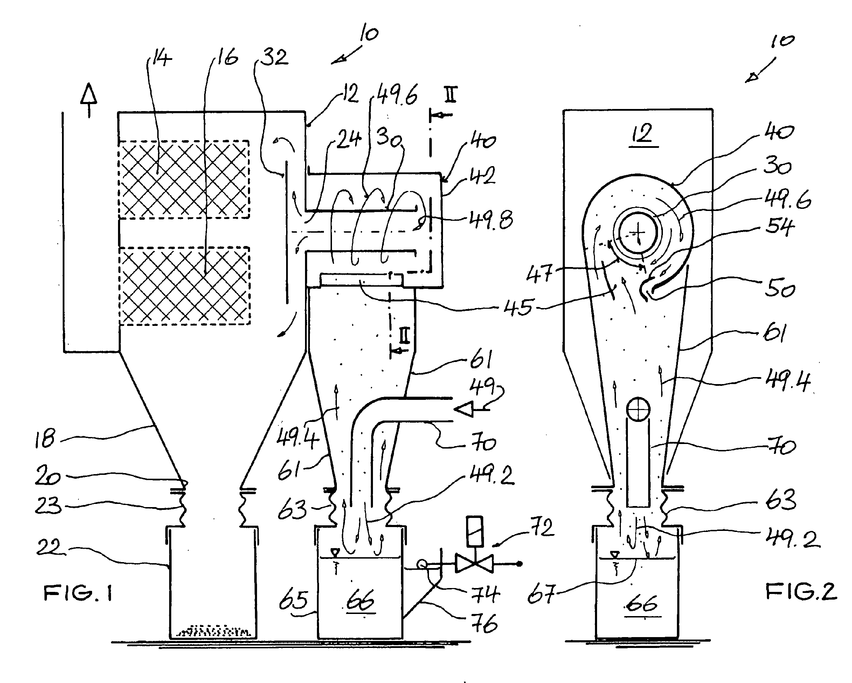

Eine Filtervorrichtung 10 besitzt ein Filtergehäuse 12 mit mehreren Filterelementen, von denen zwei Filterelemente 14, 16 in Fig. 1 dargestellt sind. Diese Filterelemente sind nebeneinander und übereinander in dem Filtergehäuse 12 angeordnet. Von Zeit zu Zeit müssen die Filterelemente 14, 16 ausgetauscht werden.

Im Bodenbereich des Filtergehäuses 12 schließt sich ein sich nach unten verjüngender Auslaufkonus 18 an, der eine gasdichte Verbindung mit dem Innenraum des Filtergehäuses 12 einerseits und mit an seinem unteren Auslauf 20 über eine Manschette 23 angeschlossenen Staubbehälter 22 sicherstellt. Beim Abreinigen der Filterelemente 14, 16 fallen die Staubpartikel, die sich an den Filterelementen 14,16 abgelagert haben, durch den Auslaufkonus 18 hindurch nach unten in den Staubbehälter 22. Bei ausreichend in dem Staubbehälter 22 befindlicher Menge solcher Staubpartikel wird der Staubbehälter 22 im Austauschverfahren entleert.

An der in Fig. 1 rechten Außenwand des Filtergehäuses 12 befindet sich die in dieses Gehäuses 12 hineinführende Einströmöffnung 24, durch die hindurch das zu reinigende trockene, gasförmige Medium in das Filtergehäuse 12 und damit in den Bereich der Filterelemente 14, 16 strömen kann.

Die Einströmöffnung 24 wird durch die Stirnseite eines inneren Rohres 30 gebildet. Innerhalb des Filtergehäuses 12, nahe bei der Einströmöffnung 24, ist eine Prallplatte 32 angeordnet. In das Filtergehäuse 12 durch die Einströmöffnung 24 hineinströmendes Gas prallt dadurch zwangsläufig von - in der Zeichnung - rechts gegen diese Prallplatte 32, wird dadurch seitlich abgelenkt und verteilt sich im Filtergehäuse. Die Gasströmung trifft damit nicht unmittelbar auf die Filterelemente 14, 16. Durch das Aufprallen auf die Prallplatte 32 werden die in der Gasströmung vorhandenen Festpartikel und Funken, sollten solche noch vorhanden sein, aus der Gasströmung separiert mit der Folge, dass diese Staubteilchen nach unten durch den Auslaufkonus 18 hindurch in den Staubbehälter 22 hineinfallen.

Das innere Rohr 30 ist von einem äußeren Rohr 40 umgeben. Dieses äußere Rohr 40 ist mit seinem linken Ende unmittelbar an der - in Fig. 1 - rechten Außenwand des Filtergehäuses 12 gasdicht angeschlossen. Das äußere Rohr 40 ist länger als das innere Rohr 30 und ist an seinem vom Filtergehäuse 12 entfernten Ende durch eine Stirnplatte 42 gasdicht verschlossen. Das gegenüberliegende, andere Ende des äußeren Rohres 40 könnte statt an dem Filtergehäuse 12 auch mittels einer Ringscheibe gasdicht am inneren Rohr 30 befestigt und damit an diesem inneren Rohr 30 befestigt sein. Das äußere Rohr 40 umgibt konzentrisch das innere Rohr 30. Das äußere Rohr 40 und das innere Rohr 30 bilden einen sogenannten Zyklon.

In dem äußeren Rohr 40 ist in seinem unteren Bereich eine Eintrittsöffnung für das in den Zyklon strömende Medium in Form eines Schlitzes 45 vorhanden. Die Breite dieses Schlitzes 45 entspricht umfangsmäßig einem Öffnungswinkel 47 von etwa 30 bis 45 Grad (Fig. 2).

Durch diesen Schlitz 45 gelangt das zu reinigende Medium in den Ringbereich zwischen äußerem Rohr 40 und dem inneren Rohr 30. Die Gasströmung wird dadurch in Rotation innerhalb des äußeren Rohres 40 gebracht. Durch diese Rotationsströmung werden die in der Gasströmung mitgerissenen Staub- und Wasserpartikel an die Innenseite des äußeren Rohres 40 geschleudert. Noch nicht abgekühlte Funkenpartikel werden durch den Wandkontakt noch zum Erlöschen gebracht.

Über den am äußeren Rohr 40 angebrachten Längsschlitz 45, der im vorliegenden Beispielsfall zusätzlich noch mit einer einspringenden Leiste 54, einer Schällippe, versehen ist, strömt einerseits die Gasströmung 49.4 von einem Leitungskanal 61 kommend ein, zum anderen werden aus der rotierenden Gasströmung 49.6 nach Umströmen ungefähr eines Dreivierteilkreises das im Gasstrom enthaltene staubgesättigte Waschwasser infolge der Zentrifugalkraft gegen die einströmende Gasströmung 49.4 ausgeschleudert. Die vom Waschwasser getrennte, rotierende Gasströmung 49.6 strömt dann - in der Fig. 1 - rechts (Strömungspfeil 49.8) in das dort offene innere Rohr 30 hinein und von dort, wie bereits oben aufgeführt, gegen die in dem Filtergehäuse 12 angeordnete Prallplatte 32.

An die Wandung des äußeren Rohres 40 schließt sich nach unten ein sich nach unten konisch verjüngender Leitungskanal 61 an. Am unteren Ende dieses Leitungskanals 61 ist über eine an demselben befestigte Manschette 63 ein Wasserbehälter 65 vorhanden. Der Wasserbehälter 65 ist im vorliegenden Beispielsfall etwa gut drei viertel mit Waschwasser 66 gefüllt.

Von außen durch den unteren Bereich des Leitungskanals 61 führt ein Rohr 70 hindurch, das mit seinem einen Ende außerhalb des Leitungskanals 61 und mit seinem anderen Ende höhenmäßig im Bereich der Manschette 63 endet. Durch dieses Rohr 70 werden die zu reinigenden gasförmigen Medien 49 der Filtervorrichtung zugeführt.

Die das Rohr 70 verlassende Gasströmung 49.2, die mit meist brennbaren Staubpartikeln versetzt ist, trifft auf die Wasseroberfläche 67 des Waschwassers 66. In der Folge davon vermischt sich die staub- und gegebenenfalls funkentragende Gasströmung intensiv mit dem Waschwasser 66. Dadurch erlöschen in dem Gasstrom vorhandene Funkenpartikel. Außerdem werden Staubpartikel durch das Benetzen mit Wasser schwerer und werden aufgrund ihres angewachsenen Gewichtes aus der nach oben durch den Leitungskanal 61 hochströmenden Gasströmung 49.4 ausgeschieden. Diese ausgeschiedenen Teilchen fallen in das Waschwasser 66 hinein. Die nach oben durch den Leitungskanal 61 strömende, mit Wasser benetzte Gasströmung 49.4 gelangt durch den Schlitz 45 hindurch in den Zyklon, so wie es vorstehend bereits beschrieben ist. Im Bereich des Schlitzes 45 oder bei der in der Zeichnung dargestellten Ausführungsform des Schlitzes 45 mit Schällippe 54 treten aus der Gasströmung separiertes Wasser und die sonstigen auch trockenen Partikel aus dem äußeren Rohr 40 heraus und fallen durch den Leitungskanal 61 nach unten in den Wasserbehälter 65. Das vom Wasser befreite restliche gasförmige Medium (Strömungspfeil 49.8) strömt in das innere Rohr 30 und von dort in das Filtergehäuse 12 hinein.

Zur Konstanthaltung des Pegels der Wasseroberfläche 67 des Waschwassers 66 ist eine Wasserstandsregulierung 72 mit einem Schwimmer 74 vorhanden. Der Schwimmer 74 ist in einem dem Wasserbehälter 65 beigeordneten Einleitungsbecken 76 angeordnet.

Der Wasserstand kann auch durch eine Sonde mit Magnetventil geregelt werden.

Durch die Eintragung von Staub in das Wasserbecken erhöht sich der Feststoffanteil des Waschwassers. Bei einem Feststoffaneil von 50 - 100 g/Liter ist der Sättigungsgrad des Wassers erreicht und der Wasserbehälter muss entleert und mit frischem Wasser aufgefüllt werden.

## Patentansprüche

1. Filtervorrichtung (10) für trockene, gasförmige Medien (49),
- mit in einem Filtergehäuse (12) angeordneten Filterelementen (14,16),
- mit Umlenkeinrichtungen für die zu filternden Medien zum Löschen eines in den gasförmigen Medien vorhandenen Funkenfluges,
- mit einem beidseitig offenen inneren Rohr (30), dessen Austrittsöffnung die Einströmöffnung (24) im Filtergehäuse (12) ist,
- mit einem das innere Rohr (30) umgebenden äußeren Rohr (40), dessen Längsachse mit der Längsachse dieses inneren Rohres (30) zusammenfällt,
- wobei das äußere Rohr (40) länger als das innere Rohr (30) ist und
- wobei die beiden Stirnseiten des äußeren Rohres (40), bis auf den Bereich der Einströmöffnung (24) in der einen Stirnseite des inneren Rohres (30) geschlossen sind,
- mit einer Eintrittsöffnung (45) für das zu reinigende Medium, die in dem äußeren Rohr (40) so vorhanden ist, dass das Medium im Bereich zwischen den beiden Rohren (30, 40) in eine rotierende Strömung (49.6) bringbar ist,
- **dadurch gekennzeichnet, dass**
- ein Wasser (66) enthaltender Wasserbehälter (65) strömungsmäßig der Eintrittsöffnung (45) so vorgelagert ist, dass das in die Filtervorrichtung (10) einströmende Medium erst nach seiner zumindest teilweisen Kontaktierung mit diesem Wasser (66) durch die Eintrittsöffnung (45) des äußeren Rohres (40) in dasselbe (40) einströmt.

2. Filtervorrichtung nach Anspruch 1,
- **dadurch gekennzeichnet, dass**
- ein Einströmrohr (70) vorhanden ist, durch das hindurch das in die Filtervorrichtung einströmende Medium (49) in das Wasser (66) im Wasserbehälter (65) hinein oder gegen dessen Wasseroberfläche (67) leitbar ist.

3. Filtervorrichtung nach Anspruch 1 oder 2,
- **dadurch gekennzeichnet, dass**
- der Wasserbehälter (65) mit dem äußeren Rohr (40) durch einen Leitungskanal (61) verbunden ist, durch den (61) hindurch einerseits das in den Wasserbehälter (65) hineingeleitete Medium in das äußere Rohr (40) leitbar ist und durch den hindurch andererseits im äußeren Rohr (40) aus dem Medium wieder abgeschiedenes Wasser wieder in den Wasserbehälter (65) zurückleitbar ist.

4. Filtervorrichtung nach einem der vorstehenden Ansprüche,
- **dadurch gekennzeichnet, dass**
- die Eintrittsöffnung (45) im äußeren Rohr (40) als Schlitz ausgebildet ist, der längs des gesamten Rohrs (40) oder auch nur auf einer Teillänge des Rohres (40) vorhanden ist.

5. Filtervorrichtung nach einem der vorstehenden Ansprüche,
- **dadurch gekennzeichnet, dass**
- eine Schällippe (54) im Bereich der rotierenden Strömung im Mantel des äußeren Rohres (40) ausgebildet ist.

6. Filtervorrichtung nach Anspruch 5,
- **dadurch gekennzeichnet, dass**
- der am äußeren Rohr endende Leitungskanals (61) die mit oder ohne Schällippe (54) ausgebildete Eintrittsöffnung (45) dicht umschließt.

7. Filtervorrichtung nach Anspruch 5 oder 6,
- **dadurch gekennzeichnet, dass**
- die Schällippe (54) an einem Spalt (50) mit einer relativ kleinen Breite ausgebildet ist.

8. Filtervorrichtung nach Anspruch 7,
- **dadurch gekennzeichnet, dass**
- die Breite des Spaltes (50) nicht größer als etwa 30 bis 50 mm (Millimeter) beträgt.

9. Filtervorrichtung nach einem der vorstehenden Ansprüche,
- **dadurch gekennzeichnet, dass**
- der Wasserbehälter (65) über ein flexibles Verbindungselement, insbesondere über eine Manschette (63) dicht an dem Leitungskanal (61) angeschlossen oder auswechselbar anschließbar ist.

10. Filtervorrichtung nach einem der vorstehenden Ansprüche,
- **dadurch gekennzeichnet, dass**
- eine Wasserstandsregulierungs-Einrichtung (72) für das im Wasserbehälter (65) vorhandene Wasser (66) vorhanden ist, mit der der Pegel des Wasserstandes festlegbar, insbesondere konstant hoch haltbar ist.

11. Filtervorrichtung nach einem der vorstehenden Ansprüche,
- **dadurch gekennzeichnet, dass**
- eine Prallplatte (32) im Bereich der im Filtergehäuse (12) vorhandenen Einströmöffnung (24) vorhanden ist.

## Claims

1. Filter device (10), for dry, gaseous media (49),
- having a filter element (14, 16) arranged in a filter housing (12),
- having diverting devices for the media that are to be filtered in order to extinguish flying sparks within the gaseous media,
- having an inner tube (30), which is open on both sides and the exit opening of which is the inflow opening (24) in the filter housing (12),
- having an outer tube (40), which surrounds the inner tube (30) and the longitudinal axis of which coincides with the longitudinal axis of this inner tube (30),
- wherein the outer tube (40) is longer than the inner tube (30) and
- wherein the two end sides of the outer tube (40) are closed apart from the region of the inflow opening (24) in one end side of the inner tube (30),
- having an entry opening (45) for the medium that is to be purified, which entry opening is present in the outer tube (40) in such a way that the medium can be brought into a rotating flow (49.6) in the region between the two tubes (30, 40),
- **characterized in that**
- a water tank (65) containing water (66) is mounted upstream, in terms of flow, of the entry opening (45), in such a way that the medium flowing into the filter device (10) only flows through the entry opening (45) of the outer tube (40) into said outer tube (40) after it has been at least partially contacted with said water (66).

2. Filter device according to Claim 1,
- **characterized in that**
- an inflow tube (70) is present, through which the medium (49) flowing into the filter device can be conducted into the water (66) in the water tank (65) or on to its water surface (67).

3. Filter device according to Claim 1 or 2,
- **characterized in that**
- the water tank (65) is connected to the outer tube (40) through a conduit (61), through which (61) on the one hand the medium that has been conducted into the water tank (65) can be conducted into the outer tube (40) and through which on the other hand water that has been separated back out of the medium in the outer tube (40) can be conducted back into the water tank (65).

4. Filter device according to one of the preceding claims,
- **characterized in that**
- the entry opening (45) in the outer tube (40) is formed as a slot which is present along the entire tube (40) or alternatively only over a partial length of the tube (40).

5. Filter apparatus according to one of the preceding claims,
- **characterized in that**
- a skimming lip (54) is formed in the region of the rotating flow in the shell of the outer tube (40).

6. Filter device according to Claim 5,
- **characterized in that**
- the conduit (61), which ends at the outer tube, tightly encloses the entry opening (45), which is formed with or without skimming lip (54).

7. Filter device according to Claim 5 or 6,
- **characterized in that**
- the skimming lip (54) is formed at a gap (50) of relatively small width.

8. Filter device according to Claim 7,
- **characterized in that**
- the width of the gap (50) is no greater than approximately 30 to 50 mm (millimetres).

9. Filter device according to one of the preceding claims,
- **characterized in that**
- the water tank (65) is tightly connected or can be tightly and exchangeably connected to the conduit (61) via a flexible connecting element, in particular a sleeve (63).

10. Filter device according to one of the preceding claims,
- **characterized in that**
- a water level control device (72) for the water (66) present in the water tank (65) is present, by means of which device (72) the level of the water can be determined and in particular kept constant.

11. Filter device according to one of the preceding claims,
- **characterized in that**
- a baffle plate (32) is present in the region of the inflow opening (24) that is present in the filter housing (12).

## Revendications

1. Dispositif de filtration (10) pour des milieux gazeux secs (49),
- avec des éléments filtrants (14, 16) disposés dans un boîtier de filtre (12),
- avec des dispositifs de renvoi pour les milieux à filtrer pour éteindre des particules incandescentes présentes dans le milieu gazeux,
- avec un tube intérieur (30) ouvert des deux côtés dont l'ouverture de sortie est l'ouverture d'entrée (24) dans le boîtier de filtre (12),
- avec un tube extérieur (40) entourant le tube intérieur (30), dont l'axe longitudinal coïncide avec l'axe longitudinal de ce tube intérieur (30),
- le tube extérieur (40) étant plus long que le tube intérieur (30) et
- les deux faces frontales du tube extérieur (40) étant fermées à l'exception de la zone de l'ouverture d'entrée (24) dans une face frontale du le tube intérieur (30),
- avec une ouverture d'entrée (45) pour le milieu à purifier qui est présente dans le tube extérieur (40) de façon que le milieu puisse être amené dans la zone située entre les deux tubes (30, 40) sous la forme d'un écoulement rotatif (49.6),
- **caractérisé en ce**
- **qu'**un réservoir d'eau (65) contenant de l'eau (66) est placé en amont de l'ouverture d'entrée (45) dans le sens de l'écoulement de façon que le milieu entrant dans le dispositif de filtration (10) n'entre dans le tube extérieur (40) par l'ouverture d'entrée (45) de celui-ci (40) qu'après avoir été mis en contact au moins partiellement avec cette eau (66).

2. Dispositif de filtration selon la revendication 1,
- **caractérisé en ce**
- **qu'**il est prévu un tube d'entrée (70) à travers lequel le milieu (49) entrant dans le dispositif de filtration peut être conduit dans l'eau (66) présente dans le réservoir d'eau (65) ou contre sa surface d'eau (67).

3. Dispositif de filtration selon la revendication 1 ou 2,
- **caractérisé en ce**
- **que** le réservoir d'eau (65) est relié au tube extérieur (40) par une canalisation de conduite (61) à travers laquelle (61), d'une part, le milieu conduit dans le réservoir d'eau (65) peut être conduit dans le tube extérieur (40) et travers laquelle, d'autre part, de l'eau séparée du milieu dans le tube extérieur (40) peut de nouveau être ramenée dans le réservoir d'eau (65).

4. Dispositif de filtration selon l'une des revendications précédentes,
- **caractérisé en ce**
- **que** l'ouverture d'entrée (45) dans le tube extérieur (40) est réalisée sous la forme d'une fente qui est présente tout le long du tube (40) ou bien seulement sur une partie de la longueur du tube (40).

5. Dispositif de filtration selon l'une des revendications précédentes,
- **caractérisé en ce**
- **qu'**une lèvre de séparation (54) est réalisée dans la zone de l'écoulement rotatif dans l'enveloppe du tube extérieur (40).

6. Dispositif de filtration selon la revendication 5,
- **caractérisé en ce**
- **que** la canalisation de conduite (61) se terminant au tube extérieur entoure hermétiquement l'ouverture d'entrée (45) réalisée avec ou sans lèvre de séparation (54).

7. Dispositif de filtration selon la revendication 5 ou 6,
- **caractérisé en ce**
- **que** la lèvre de séparation (54) est réalisée sur une fente (50) de largeur relativement petite.

8. Dispositif de filtration selon la revendication 7,
- **caractérisé en ce**
- **que** la largeur de la fente (50) n'est pas supérieure à environ 30 à 50 mm (millimètres).

9. Dispositif de filtration selon l'une des revendications précédentes,
- **caractérisé en ce**
- **que** le réservoir d'eau (65) est hermétiquement raccordé ou raccordable de manière échangeable à la canalisation de conduite (61) par l'intermédiaire d'un élément de raccordement flexible, en particulier par l'intermédiaire d'une manchette (63).

10. Dispositif de filtration selon l'une des revendications précédentes,
- **caractérisé en ce**
- **qu'**il est prévu un dispositif de régulation du niveau d'eau (72) pour l'eau (66) présente dans le réservoir d'eau (65), lequel permet de déterminer le niveau de l'eau, en particulier de le maintenir constamment élevé.

11. Dispositif de filtration selon l'une des revendications précédentes,
- **caractérisé en ce**
- **qu'**il est prévu une plaque déflectrice (32) dans la zone de l'ouverture d'entrée (24) présente dans le boîtier de filtre (12).
